# EUROPEAN PATENT APPLICATION

(11) **EP 0 728 418 A1**
(43) Date of publication of application: **28.08.1996**
(21) Application number: 95930737.2
(22) Date of filing: 12.09.1995
(51) Int. Cl.: A23K 1/16, A23K 1/18

(54) **METHOD FOR BREEDING COWS BY FEEDING HIGHLY CONDENSED NUTRITIOUS FEED**

(30) Priority: 12.09.1994 JP 217711/94
(71) Applicant: Ajinomoto Co., Inc., Tokyo 104 (JP)
(72) Inventor: SATO, Hiroyuki Central Research Laboratories,, Kawasaki-shi Kanagawa-ken 210 (JP); SUZUKI, Hiroyuki, Morrisonville, NY 12962 (US); FUJIEDA, Takeshi Central Research Laboratories,, Kawasaki-shi Kanagawa-ken 210 (JP); WATANABE, Kazumasa Central Research Laboratories,, Kawasaki-shi Kanagawa-ken 210 (JP); JULIEN, William E. W.E. Julien & Associates, Inc., Omaha, NE 68122 (US)
(74) Representative: Strehl Schübel-Hopf Groening & Partner
(86) International application number: JP9501807
(87) International publication number: WO9608169

(57) **Abstract**

Provided is a realistic method for feeding milk cows which fits the actual raising of milk cows based on the modified Cornell computer model. Firstly a method for increasing milk production of dairy cattle is characterized by daily feeding dairy cattle with a highly concentrated amino acid feed containing the amino acids protected in the first stomach of a cow and formed predominantly of lysine, methionine, isoleucine, valine, arginine, and histidine at doses containing the amino acids in concentrations 1.5 to 3 times those demanded by the dairy cattle at the abomasum and intestine for the period from three weeks before the expected date of delivery till the date of delivery. Secondly, following the first method, the method is characterized by daily feeding dairy cattle with a highly concentrated amino acid feed containing the amino acids protected in the first stomach of a cow and formed predominantly of lysine, methionine, isoleucine, valine, and histidine at doses containing the amino acids in concentrations 1.1 to two times those demanded by the pregnant cows at the abomasum and intestine for the period of six weeks at most after the time of delivery.

## Description

### [Field of the Invention]

This invention relates to a highly concentrated nutritious feed for milk cows and to a method for raising dairy cattle with the nutritious feed.

### [Prior Art]

The feed for dairy cattle has been variously improved for the purpose of increasing the yield of milk and enhancing the quality of milk. Conventionally, the dairy cattle have been mainly fed on pasture and also fed with Indian corn, bran, and soybean flour and, for the sake of enriching protein supply, further with fish meal and powdered blood and, besides, given various nutrition-promoting agents such as inorganic substances, urea, vitamins, sugars, and lipids. JP-A-47/38467 and USP 3,959,493 disclose a rumen-protected feed additive for ruminants which, with due respect to the specialty of the digestive organ of ruminants, is so adapted that the components thereof nutritional to a milk cow may be protected while they remain in the rumen and they may be effectively absorbed in the abomasum and the subsequent part of the digestive tract. JP-A-47/07762 and USP 3,655,864 disclose a rumen-protected feed additive which, as a result of a study initiated with a view particularly to amino acids as components of proteins, has realized the use of such amino acids for the purpose of improving the quality of milk.

USP 5,219,596 discloses four kinds of compound feed (basic compound, mixed compound, concentrated compound, and complete compound) for increasing the yield of milk and their compositions and, concerning the four essential amino acids contained therein, i.e. lysine, methionine, histidine, and phenyl alanine, further teaches formulas for computing the total of their amounts which existed in the feed and eventually reach the specific site of digestion of a milk cow (abomasum) in their undecomposed state and the amounts of amino acids synthesized by microorganisms living in the rumen of the milk cow. According to the data, the amounts of essential amino acids which reach the abomasum of a milk cow per day are 69 to 332 g of lysine, 20 to 105 g of methionine, 22 to 113 g of histidine, and 44 to 225 g of phenyl alanine. The amounts of increase in the yield of milk owing to the use of the compound feed and the record of raising dairy cattle, however, are mentioned nowhere in the specification. The specific method for administering milk cows with the compound feed and the amounts of amino acids reaching the abomasum during the period of administration are shown nowhere therein.

Concerning the computation of the amounts of amino acids demanded by ruminant mammals and the amounts of amino acids supplied from feed, the Cornell Model (Search: Agriculture, Ithaca, NY: Cornell Univ. Agr. Exp. No. 34, 122 pp. 1990, ISSN 0362-2754, incorporated herein by reference) pertaining to carbohydrates and proteins required for the computation of feed for cows has been known. As a model for determining the amounts of amino acids demanded by a cow and estimating the amount of feed to be used, it has been proposed with the intention of allowing determination by computation the measures to be taken to cope with a wide range of variations including the adjustment of daily changes in the amount of essential nutrition for a milk cow, the determination of the composition and the compounding of feed based on the adjustment, the adjustment of breeding of milk cows, the management of raising of dairy cattle, and the repression of excrement of cows in due consideration of the influence on the environment. This model is utilized effectively in the form of a computer spread sheet and applied to both beef cattle and dairy cattle at varying levels and types of production. By the Cornell Model, the metabolism of proteins in each individual cow under specific conditions (the status of the cow as to the stage of growth sorted into the maintenance cycle, the period of lactation, and the period of reproduction, etc.) can be computed based on the species, the body weight at the time of birth, the present total body weight, etc. This model is further designed so that the cow may respond to the feed which is supplied on the basis of feed composition, ratio of digestion, and digestive proteins (both digestive proteins which escape the influence of the action of the rumen and bacterial proteins digested). The amounts of metabolic proteins demanded by a specific ruminant mammal can be computed as described above and compared with the calculated amounts of metabolic proteins supplied from a given feed. When the metabolic proteins are given to the specific cow in amounts smaller than are necessary in view of the physiological condition and the period of lactation, the feed additive containing the rumen-protected amino acids of milk cow mentioned above is increased by replenishment to the required level.

The amount of the rumen-protected amino acid feed additive incorporated in the basic feed is computed by replacing the amounts of digestive proteins short in the feed with the amounts of methionine and/or lysine protected against the action of the lumen. This conversion is attained by subjecting the digestive proteins (supplied from the feed) to the amino acid analysis in accordance with the aforementioned Cornell Model advocated by Chalupa et al (1991 Cornell Convention for production of feed, p 44, incorporated herein by reference). The amounts of methionine and lysine required for a specific ruminant mammal can be computed by first separating the protein fraction of the feed decomposed in the first through the third anterior stomach and the protein fraction not decomposed in these anterior stomach and totaling the amounts of methionine and lysin necessary for lactation and maintenance computed by the Cornell Model.

By the analysis using the Cornell Model and other computer models as well, the kinds of essential amino acids for the milk cow and the amounts of such essential amino acids short in the milk cow can be found in detail. These are, however, the results of computation and are nothing realistic. Since a milk cow consumes physical strength during the delivery, for example, the amount of feed taken by the milk cow immediately after the delivery is an average of about 20% lower than usual owing to the drop of physical strength. When dairy cattle are actually raised and the amounts of milk yielded by the milk cows, the quality of milk, and the condition of health of the cattle are visually examined, the results of this observation show no such ideal process of raising as is obtained by the computer model. In actuality, however, the amounts of milk yielded are equal substantially to those estimated and the quality of milk is not noticeably lower than that estimated. This reality is ascribed to the fact the milk cows, by instinct, endeavor to continue producing necessary amounts of milk during the period of milking. The endeavor consequently exerts physical burden on the milk cows and compels the milk cows to consume physical strength under various forms of stress. It is feared that this physical fatigue on the part of milk cows may affect the amounts of milk to be yielded by them in the subsequent years.

### [Object of the Invention]

This invention consists in providing a realistic method for raising milk cows which is adapted for the actual raising of milk cows by correcting the kinds of amino acids and the amounts thereof heretofore determined by the computer model for the growth of production of milk.

### [Summary of the Invention]

The inventors have continued raising milk cows for the purpose of increasing the production of milk and improving the quality of milk and meantime pursued various studies for improvements. In the process of observation of the development of raising, they have remarked that the amounts of feed taken by the milk cows decrease past the time of delivery and that the decreases in the amounts of feed taken completely vanish 8 to 9 weeks after the time of delivery. They have surmised that the decreases in the amounts of feed taken by milk cows have a detrimental effect from the viewpoint of supply of nutrition and naturally affect the production of milk. After a further study, the inventor found that efficient supply of proteins particularly bearing on the physical strength of milk cows during the period under consideration for the elimination of the adverse phenomenon is attained by causing the milk cows to take various amino acids readily acceptable by milk cows and, concerning the amounts of these amino acids, further found that the amino acids taken in amounts 1.5 to 3 times the amounts normally demanded by milk cows before the time of delivery and in amounts 1.1 to 2 times the normally demanded amounts in period after the delivery are effective in the milk production.

Specifically, this invention pertains firstly to a method for raising dairy cattle characterized by daily feeding the dairy cattle with a highly concentrated amino acid feed containing the total amino acids of a) the amino acids protected in the rumen of a cow and b) the amino acids contained naturally in raw material of feed composition and formed predominantly of lysine, methionine, isoleucine, valine, arginine and histidine at doses containing said amino acids in concentrations 1.5 to 3 times those demanded demanded by said dairy cattle at the abomasum and intestine for the period from three weeks before the expected date of delivery till the date of delivery.

This invention pertains secondly to, following the first method above, a method for raising milk cow characterized by daily feeding the milk cow with a concentrated amino acid feed containing the total amino acid of a) the amino acids protected in a rumen of a milk cow and b) the amino acids contained naturally in raw material of feed composition and formed predominantly of lysine, methionine, isoleucine, valine, arginine and histidine at doses containing said amino acids in concentrations 1.1 to 2 times those demanded by the milk cows at the abomasum and intestine for the period of six weeks at most after the time of delivery.

The amounts of amino acids demanded by a milk cow are to be determined in accordance with the Cornell Model as follows. A milk cow yielding 88 pounds of milk having a crude protein content of 3.05% daily, for example, requires 1220 g (88 lb x 453.6 g x 3.05%) of crude protein per day to satisfy her daily yield of milk. The concentrations of methionine and lysine in the milk for lactation can be determined by assay. To supply lysine and methionine in the least allowable amounts for lactation, the amount of crude protein necessary for lactation may be increased. This amount is adjusted by the metabolic efficiency manifested by the cow on methionine and lysine to be taken. In the case of a crude protein milk having a methionine content of 2.7% and a lysine content of 8.3%, for example, since the milk cow's digestive efficiency of methionine and lysine is 75%, the amount of methionine required by the milk cow for lactation is found, thus: 1220 g/day x 0.027 ÷ 0.75 = 43.9 g. The amount of lysine is similarly found to be 135.0 g.

Of course, the amount of amino acids required by the milk cow for the maintenance of her own physical condition can be computed as the total of the amounts of protein in the scuff required by the milk cow and that in the urine and that in the feces discharged in accordance with the Cornell Model mentioned above. The amount of methionine required is determined by multiplying the amount of protein required for the maintenance by a factor of 0.028 and the amount of lysine required determined by the same multiplication using a factor of 0.082 instead. For perfect computation of the amount of metabolizable protein in accordance with the Cornell Model, the total amounts of methionine and lysine demanded are obtained by adding the amount of fecal protein to the aforementioned amounts of scuff, urine, and feces and multiplying the result of addition by 0.028 (methionine) and 0.082 (lysine).

The amount of metabolizable amino acids supplied to the cow is also computed in accordance with the Cornell Model. It is the total of the amounts of lysine and methionine originating in digested microorganic proteins and the amount of lysine and methionine originating from the feed and passing through the anterior stomachs. The Cornell Model is further applied to the determination of total proteins originating in microorganisms and received in the lower stomach of the ruminant mammal. The amount of total proteins can be approximated by multiplication using a factor of 0.028 for methionine and a factor of 0.082 for lysine. The Cornell Model is similarly applied to the determination of the amount of total proteins originating in the feed based on a specific feed composition and passing the anterior stomachs. The amounts of methionine and lysine digested can be computed on the basis of the amounts of methionine and lysine contained in the digestive protein fractions of the respective components of the specific feed composition.

The amount of amino acids supplied by the feed can be computed as the total of the amino acid contents present in the components of feed as indicated by the Cornell Model. The amino acid contents mentioned above can be computed by consulting relevant data given in the table of amino acid composition of protein or other literature or by subjecting the protein to amino acid analysis. The amount of amino acids supplied by feed is converted in terms of metabolic efficiency and added to the amount of amino acids originating in microorganic crude protein and metabolized by the ruminant mammal. The sum thus obtained is used as the amount of total amino acids for supply to the ruminant mammal.

In the feed for the ruminant mammal of the following composition (inclusive of microorganic protein), i.e. alfalfa silage (amount of dry fodder taken daily 8.2 kg, content of protein 17.6%), licorice (similarly 2.7 kg and 16%), HM corn (similarly 9.3 kg and 9.56%), and concentrated feed (similarly 3.4 kg and 36.4%), the amount of methionine which passes the anterior stomachs (amount of methionine passed through the anterior stomachs and metabolized by the ruminant mammal) is computed as 52.5 g. Since the feed mentioned above, therefore, supplies 6.5 g of methionine less than the demanded amount daily (89% of the daily demanded amount), it is required to be replenished with 6.5 g per day of the methionine which has been protected from the action of the first stomach. The amount of lysine demanded, the amount of lysine supplied by the feed, and the amount of lysine required to be replenished are computed similarly to those of methionine mentioned above.

The amounts of amino acids determined by such models as mentioned above are justified solely on the major premise that the cow is raised under a healthy condition and neither lose physical strength nor sustain mental stress because of delivery. The feed compositions to be given to cows as designed based on the amount of milk yielded and the length of time preceding and following the time of delivery and the amino acid balances thereof are shown in Table 1 through Table 6. These tables reveal those species of amino acids which have minus amino acid balances. Generally, attempts have been made to make up these shortages by replenishment. Cows, however, consume physical strength and sustain mental stress. The feed is switched from the natural fodder to the high-protein feed somewhere between the time the cow delivers an offspring and the time the cow begins to discharge milk. The cow offers more or less resistance to the new feed because of the difference of taste from the natural fodder. Thus, the amount of feed taken by the cow immediately after the delivery shows a decrease. Let 100 stand for the amount of feed taken 9 to 10 weeks after the delivery, and the amount of feed taken will abruptly decrease to an average of 50% during the first two weeks following the delivery. Though the amount will gradually increase thereafter, specifically to 70% during the third through the fourth week, 80% during the fifth through the sixth week, and to slightly more than 90% during the eighth week, respectively after the delivery.

**TABLE 1**

| Feed Composition No. 1 Amount of milk yielded 70.0 Lbs/day, crude protein content 14% | | |
|---|---|---|
| | Amount of feed given as is daily (Lbs) | Amount of feed given dry daily (Lbs) |
| Soybean cake | 3.33 | 3.00 |
| Soybean husk | 2.22 | 2.00 |
| Minerals and vitamins | 1.58 | 1.50 |
| Alfalfa (blossoming stage) | 36.84 | 14.00 |
| Corn silage (50% GR) | 28.57 | 10.00 |
| Indian corn (56 grain) | 18.18 | 16.00 |
| Corn gluten meal | 0.00 | 0.00 |
| Corn gluten feed | 0.00 | 0.00 |
| Powdered blood | 0.00 | 0.00 |
| Inorganic substances | 0.00 | 0.00 |

**TABLE 2**

| Amino Acid Balance No. 1 Amount of milk yielded 70.0 Lbs/day, crude protein content 14% | | | | |
|---|---|---|---|---|
| | A Amount of amino acids supplied, g/day | B Amount of amino acids absorbed at the duodenum, g/day | C Amount of amino acids demanded, g/day | D (B - C) Balance |
| Methionine | 51.1 | 39.5 | 47.0 | -7.5 |
| Lysin | 145.6 | 118.2 | 143.1 | -24.9 |
| Arginine | 126.5 | 107.4 | 89.6 | 17.9 |
| Threonine | 103.1 | 86.2 | 82.6 | 3.6 |
| Leucine | 183.0 | 151.7 | 145.3 | 6.3 |
| Isoleucine | 111.6 | 91.5 | 112.4 | -20.9 |
| Valine | 125.3 | 101.2 | 111.6 | -10.4 |
| Histidine | 53.4 | 44.7 | 49.1 | -4.4 |
| Phenyl alanine | 109.9 | 88.4 | 82.6 | 5.8 |
| Tryptophan | 25.5 | 18.0 | 28.4 | NA |
| NA: not available | | | | |

**TABLE 3**

| Feed Composition No. 2 Amount of milk yielded 70.0 Lbs/day, crude protein content 18% | | |
|---|---|---|
| | Amount of feed given as is daily (Lbs) | Amount of feed given dry daily (Lbs) |
| Soybean cake | 7.16 | 6.45 |
| Soybean husk | 1.44 | 1.30 |
| Minerals and vitamins | 1.58 | 1.50 |
| Alfalfa (blossoming stage) | 27.89 | 10.60 |
| Corn silage (50% GR) | 34.86 | 12.20 |
| Indian corn (56 grain) | 14.77 | 13.00 |
| Corn gluten meal | 1.60 | 1.45 |
| Corn gluten feed | 0.00 | 0.00 |
| Powdered blood | 0.00 | 0.00 |
| Inorganic substances | 0.00 | 0.00 |

**TABLE 4**

| Amino Acid Balance No. 2 Amount of milk yielded 70.0 Lbs/day, crude protein content 18% | | | | |
|---|---|---|---|---|
| | A Amount of amino acids supplied, g/day | B Amount of amino acids absorbed at the duodenum, g/day | C Amount of amino acids demanded, g/day | D (B - C) Balance |
| Methionine | 56.0 | 44.7 | 45.7 | -1.0 |
| Lysin | 157.9 | 131.3 | 139.4 | -8.1 |
| Arginine | 148.6 | 130.1 | 86.4 | 43.7 |
| Threonine | 112.4 | 96.2 | 80.1 | 16.1 |
| Leucine | 225.9 | 196.0 | 141.9 | 54.0 |
| Isoleucine | 127.6 | 108.3 | 109.8 | -1.5 |
| Valine | 140.9 | 116.9 | 108.8 | 8.1 |
| Histidine | 62.4 | 54.0 | 47.9 | 6.1 |
| Phenyl alanine | 129.4 | 108.8 | 80.2 | 28.5 |
| Tryptophan | 24.8 | 17.5 | 27.7 | NA |
| NA: not available | | | | |

**TABLE 5**

| Feed Composition No. 3 Amount of milk yielded 55 Lbs/day, basic feed | | |
|---|---|---|
| | Amount of feed given as is daily (Lbs) | Amount of feed given dry daily (Lbs) |
| Soybean cake | 3.38 | 3.09 |
| Soybean husk | 0.00 | 0.00 |
| Minerals and vitamins | 0.51 | 0.49 |
| Alfalfa (blossoming stage) | 61.29 | 22.31 |
| Corn silage (50% GR) | 19.57 | 6.01 |
| Indian corn (56 grain) | 15.25 | 9.44 |
| Corn gluten meal | 0.00 | 0.00 |
| Corn gluten feed | 3.66 | 3.25 |
| Powdered blood | 0.45 | 0.39 |
| Inorganic substances | 0.12 | 0.12 |

**TABLE 6**

| Amino Acid Balance No. 3 Amount of milk yielded 55 Lbs/day, basic feed | | | | |
|---|---|---|---|---|
| | A Amount of amino acids supplied, g/day | B Amount of amino acids absorbed at the duodenum, g/day | C Amount of amino acids demanded, g/day | D (B - C) Balance |
| Methionine | 53.4 | 41.0 | 41.7 | -0.7 |
| Lysin | 161.2 | 131.8 | 126.6 | 5.2 |
| Arginine | 139.4 | 119.1 | 81.6 | 37.5 |
| Threonine | 106.8 | 89.2 | 74.0 | 15.2 |
| Leucine | 178.1 | 145.7 | 128.2 | 17.5 |
| Isoleucine | 111.6 | 90.7 | 98.5 | -7.9 |
| Valine | 126.5 | 101.7 | 98.5 | 3.3 |
| Histidine | 59.3 | 49.8 | 43.4 | 6.4 |
| Phenyl alanine | 114.9 | 92.3 | 73.4 | 18.9 |
| Tryptophan | 28.0 | 19.7 | 25.0 | NA |
| NA: not available | | | | |

Shortages in ten essential amino acids in a milk cow at the stage of decreasing the amount of feed taken were determined by the Cornell Model. The results are shown in Table 7. The results represent the data determined by computation using the amounts of amino acids contained in the feed given to a high productive cow, the amounts of amino acids absorbed at the duodenum of the cow, the amount of amino acids demanded by the cow, and the amounts of decreases in the feed taken immediately after delivery of an offspring. The table indicate that all ten amino acids were invariably short during the first six weeks following the delivery. Only the three amino acids, i.e. arginine, phenyl alanine, and tryptophan, began to satisfy the amounts demanded during the seventh through the eighth week after the delivery. By replenishing the shortages during the relevant periods, therefore, the amount of milk yielded immediately after the delivery will be suddenly increased, the decrease in the body weight of the milk cow will be curbed, and the maintenance of health of the cow will be attained more conspicuously.

**TABLE 7**

| Amounts of Essential Amino Acids Taken (g/day) and Their Shotages (g/day) Amounts of milk yeleded 70.0 Lbs, crude protein content 14% | | | |
|---|---|---|---|
| | Elapse of time after delivery | | |
| | 0 through 2nd week | 5th through 6th week | 7th through 8th week |
| | Ratio of amount of feed taken dry/amount of normal feed (%) | | |
| | 50 | 80 | 90 |
| Methionine | 19.8(27.3) | 31.5(15.4) | 35.6(11.5) |
| Lysine | 59.1(84.0) | 94.6(15.4) | 106.4(36.6) |
| Arginine | 53.7(21.3) | 86.0( 3.6) | 96.7(+7.1) |
| Threonine | 44.6(38.0) | 68.8(13.8) | 77.6( 5.0) |
| Leucine | 75.9(69.5) | 121.4(23.9) | 136.5( 8.5) |
| Isoleucine | 45.8(66.7) | 73.2(39.2) | 82.4(30.0) |
| Valine | 50.5(61.1) | 81.0(30.3) | 91.1(20.5) |
| Histidine | 22.3(25.6) | 36.0(13.3) | 40.2( 8.9) |
| Phenyl alanine | 44.2(39.4) | 70.7(11.9) | 80.0(+2.6) |
| Tryptophan | 9.0(19.4) | 14.4( 6.0) | 16.2(+7.8) |
| ( ): Shortage (g/day) +: Surplus (g/day) | | | |

Though these shortages of amino acids may be wholly make up by feeding the relevant milk cow with the feed additive in the form of rumen-protected (rumen bypass) amino acids, it is desirable to adopt proteins in normal use for the purpose of replenishing most of amino acids. The relation between proteins and amino acid compositions are shown in Table 8. It is advantageous on the part of a cattle raiser to replenish such amino acids as are still in short supply with the feed in the form of rumen-bypass amino acids.

**TABLE 8**

| Relation Between Proteins and Amino Acid Compositions | | | | | | |
|---|---|---|---|---|---|---|
| | Amino acid contents (%) | | | | | |
| | Powdered blood | Powdered feather | Fish flour **(CP 60%)** | Soybean cake | Cottonseed cake | Rapeseed cake |
| Dry fodder (%) | 90.4 | 92.0 | 92.1 | 88.3 | 88.5 | 87.7 |
| Crude protein (%) | 84.1 | 84.5 | 67.4 | 46.1 | 35.4 | 37.1 |
| Arginine | 3.68 | 5.81 | 4.00 | 3.36 | 3.96 | 2.17 |
| Glycine | 3.85 | 0.68 | 4.68 | 1.94 | 1.90 | 1.90 |
| Histidine | 5.60 | 0.73 | 1.71 | 1.20 | 0.89 | 0.97 |
| Isoleucine | 1.25 | 4.20 | 2.92 | 2.05 | 1.42 | 1.50 |
| Leucine | 11.27 | 7.04 | 4.95 | 3.38 | 2.09 | 2.62 |
| Lysine | 8.14 | 2.29 | 5.28 | 2.91 | 1.45 | 2.00 |
| Methionine | 1.12 | 0.68 | 2.00 | 0.52 | 0.53 | 0.69 |
| Cystine | 0.63 | 3.12 | 0.56 | 0.70 | 0.60 | 0.70 |
| Phenyl alanine | 6.27 | 4.11 | 2.68 | 2.28 | 1.84 | 1.53 |
| Thyrosin | 2.72 | 2.41 | 2.17 | 1.52 | 0.96 | 1.01 |
| Threonine | 3.78 | 4.03 | 2.86 | 1.74 | 1.17 | 1.60 |
| Tryptophan | 1.21 | 0.49 | 0.71 | 0.64 | 0.46 | 0.44 |
| Valine | 7.02 | 6.49 | 3.46 | 2.07 | 1.70 | 1.93 |
| Serine | 4.05 | 9.55 | 2.76 | 2.19 | 1.77 | 1.55 |
| CP: crude protein | | | | | | |

In cases where the shortages of amino acids immediately after the delivery are to be replenished with proteins and rumen-bypass amino acids, the amounts of amino acids to be supplied for the replenishment may be determined as follows. The amounts of the proteins shown in Table 8 required to make up the shortages of amino acids indicated in Table 7 will be determined. In this case, however, if the amounts are so determined as to avoid producing shortages in all the amino acids, the disadvantage will arise that surpluses occur in some, if not all, the amino acids. Even when such surpluses of amino acids are absorbed in the cow, they are unnecessary for the cow from the viewpoint of nutrition. Thus, they are not absorbed as nutrition but are discharged out of her body. They are wastefully given. If the surpluses are unduly large, the nitrogen and other elements inevitably entrained in the excrement will possibly bring about adverse effects on the environment. It is, therefore, necessary that the shortages of amino acids be substituted not wholly with proteins but practically wholly with amino acids and that the amounts of the amino acids used for the replenishment be such as to minimize possible surpluses of amino acid over the amounts demanded by the milk cow. If the amounts of amino acids are still short in spite of the replenishment, the shortages will be made up with a feed additive in the form of rumen-bypass amino acids separately of proteins.

The cow expecting delivery of an offspring takes such nutrition as is required for the growth of the fetus in the womb and the maintenance of her own physical strength. As respects the method of feeding the cow for raising, the natural crude feed is mainly used from the initial stage through the middle stage of the non-milking period and is then gradually switched to the high-protein feed from the middle stage through the last stage. When the cow in this stage is given amino acids in amounts 1.5 to three times the amounts demanded by the cow as computed in accordance with the Cornell Model, it is found that the stress inflicted on the cow by her deliver is alleviated, the maintenance of health on the part of the cow is ensured, and the amount of milk yielded immediately after the delivery is increased over the heretofore attainable level.

The relation between the method of feeding and the period of feeding is not limited to what has been described above. It is allowable to use the highly concentrated amino acid feed in combination with the concentrated amino acid feed mentioned above over the periods preceding and following the time of delivery. More specifically, the cow may be fed with the highly concentrated amino acid feed from three weeks before the expected date of delivery to the date of delivery or it may be fed with the highly concentrated amino acid feed for three weeks preceding the delivery and then with the concentrated amino acid feed continuously for six weeks following the delivery. It is permissible to feed the cow exclusively with the concentrated amino acid feed continuously for six weeks after the delivery. This latter method of feeding, judging from the amount of milk yielded and the condition of health of the cow, is found to be effective as compared with the aforementioned method of feeding. The improvement, however, is not so much as expected.

There are 10 limiting amino acids which are demanded by milk cows. They are methionine, lysine, arginine, threonine, leucine, isoleucine, valine, histidine, phenyl alanine, and tryptophan. In accordance with the results of computation based on the Cornell Model, the amino acids which are particularly short among other amino acids mentioned above are methionine, lysine, isoleucine, valine, histidine, and/or arginine.

Now, examples of the production of rumen-bypass amino acids to be given to cows or milk cows are described below. The production is not limited to these examples but may be applied to those rumen-bypass amino acids which are currently known to the art and those which will be developed in the future. As respects the kinds of amino acids, the rumen-bypass amino acids may be manufactured by simultaneously adding all the amino acids or by having these amino acids manufactured either singly or in the form of a mixture of two or more members and then suitably combined. They are given to the cow in the computed amount remarked above.

### [Production Example 1]

### 〈Production of rumen bypass amino acid〉

In a kneader, 325 g of L-lysine hydrochloride, 99.5 g of methionine, 273 g of isoleucine, 135.7 g of valine, 57.4 g of histidine, 172 g of talc, 2.5 g of carboxymethyl cellulose sodium, and 135 g of water were kneaded. By the use of an extrusion pelletizer provided with a screen containing perforations 1.5 mm in diameter, the resultant mixture was manufactured into cylindrical granules. The granules thus obtained were reshaped into nearly spherical granules by the use of a sphering device (produced by Fuji Powder K.K. and marketed under trademark designation of "Marumerizer"). The resultant spherical granules were dried by fluidization to obtain seeds having a grain size distribution of 1 mm to 2.5 mm in particle diameter (average particle diameter: 1.5 mm) and containing L-lysine hydrochloride.

A protective substance comprising 98.32 parts by weight of hardened beef tallow and 1.68 parts by weight of lipase A (produced by Amano Seiyaku K.K. and marketed under trademark designation of "Amano 6") was melted. Then, 100 parts by weight of the seeds were coated with 35.8 parts by weight of the molten protective substance and then coated further with 7.2 parts by weight, based on 100 parts by weight of the coated seeds, of molten beef tallow. When the coated particles were subjected to rating tests hereinafter described, they were found to have a first stomach dissolution ratio of 9% and a digestive organ equivalent dissolution ratio of 76%.

### Rating Tests

(a) The amino acid content of the coated particles is determined by melting 5g of sample in 100 ml of boiling water and measured by an automatic amino acid analyzer.
(b) Another 5g of the coated particles is shaken in 100 ml of distilled water at a temperature of 39°C for 6 hours and then an amount of amino acid in a liquid phase is measured by an automatic amino acid analyzer. The ratio (%) of the amino acid amount thus obtained to the amino acid amount obtained in (a) above is evaluated as a first stomach dissolution ration.
(c) Another 5g of the coated particles is shaken in 100 ml of pepsin-creatine buffer solution at a temperature of 39°C for 6 hours and then an amount of amino acid in a liquid phase is measure by an automatic amino acid analyzer. The ratio (%) of the amino acid amount thus obtained to the amino acid amount obtained in (a) above is evaluated as a digestive organ equivalent dissolution ratio.

### [Production Example 2]

### 〈Production of rumen bypass amino acid〉

In a kneader, 616 g of L-lysine hydrochloride, 196 g of methionine, 316 g of arginine, 172.5 g of talc, 2.5 g of carboxylmethyl cellulose sodium, and 135 g of water were kneaded. By the use of an extrusion pelletizer provided with a screen containing perforations 1.5 mm in diameter, the resultant mixture was manufactured into cylindrical granules. The granules thus obtained were reshaped into nearly spherical granules by the use of a sphering device (produced by Fuji Powder K.K. and marketed under trademark designation of "Marumerizer"). The resultant spherical granules were dried by fluidization to obtain seeds having a grain size distribution of 1 mm to 2.5 mm in particle diameter (average particle diameter: 1.5 mm) and containing L-lysine hydrochloride.

A protective substance comprising 98.32 parts by weight of hardened beef tallow and 1.68 parts by weight of lipase A (produced by Amano Seiyaku K.K. and marketed under trademark designation of "Amano 6") was melted. Then, 100 parts by weight of the seeds were coated with 35.8 parts by weight of the molten protective substance and then coated further with 7.2 parts by weight, based on 100 parts by weight of the coated seeds, of molten beef tallow. When the coated particles were subjected to the aforementioned rating test, they were found to have a first stomach dissolution ratio of 9% and a digestive organ equivalent dissolution ratio of 72%.

The following Examples illustrate the feeding of dairy cattle according to the invention.

### [Example 1]

Eighty (80) bi- or more-parous Holstein cows divided into two groups were used in this test. The 40 cows of the control plot were fed with a dry-phase perfect mixed feed shown in Table 9 from three weeks before delivery till the date of delivery. The amino acid balance of the feed was as shown in the column headed by "Control Plot" in Table 10. Meanwhile, the other 40 cows of the plot for ingestion of rumen bypass amino acid (RPAA ingestion plot) were fed with the rumen bypass amino acid obtained in Production Example 2 in addition to the dry-phase perfect mixed feed shown in Table 9 from three weeks before delivery till the date of delivery. The improved amino acid balance involved in this case is additionally shown in the column headed by "RPAA Ingestion Plot" in Table 10. After delivery, the cows of the control plot and those of the rumen bypass amino acid ingestion plot were both fed with a lactation-phase perfect mixed feed shown in Table 11. Even the cows of the RPAA ingestion plot were not particularly fed with the rumen bypass amino acid (RPAA). The amino acid balance originating in this feed is shown in Table 12.

The changes in the amount of milk produced by a total of 80 cows belonging to the two plots are shown as divided into the two plots in Table 13. The data of Table 13 show that the amounts of milk produced by the cows of the rumen bypass amino acid ingestion plot were larger than those produced by the cows of the control plot, namely that the ingestion of the highly concentrated amino acid feed prior to delivery was effective in increasing the production of milk.

**TABLE 9**

| Composition of dry-phase perfect mixed feed | | |
|---|---|---|
| | Dry matter (%) | Dry matter intake (lb/day) |
| Soybean cake (crude protein 49%) | 1.00 | 0.22 |
| Cottonseed | 7.80 | 1.76 |
| Corn silage | 26.50 | 6.00 |
| High-water corn | 13.20 | 3.00 |
| Corn fermentation cake | 3.90 | 0.87 |
| Rape-seed cake | 1.20 | 0.26 |
| Beer residue (dry) | 7.10 | 1.60 |
| Blood powder | 3.18 | 0.78 |
| Hay | 6.40 | 1.44 |
| Haylage | 7.70 | 1.75 |
| Beef tallow | 0.40 | 0.10 |
| Corn gluten meal | 0.80 | 0.17 |
| Minerals and vitamins | 2.63 | 0.64 |
| Oat | 17.60 | 3.98 |
| Rumen bypass amino acid | - | 0.60 |
| Crude protein content 16.8% Period of feeding: From 3 weeks before delivery till date of delivery | | |

**TABLE 10**

| Amino acid balance of dry-phase perfect mixed feed | | | | | |
|---|---|---|---|---|---|
| | A Amino acid supplied, g/day | B Amount of intestinal absorption, g/day | C Amino acid demanded, g/day | D (B/C) Excess in control plot (%) | E Excess in RPAA plot (%) |
| Methionine | 29.5 | 22.5 | 16.1 | 139 | 170 |
| Lysine | 86.5 | 69.4 | 47.1 | 147 | 181 |
| Arginine | 76.4 | 64.1 | 47.7 | 134 | 151 |
| Threonine | 60.0 | 49.6 | 30.3 | 164 | 164 |
| Leucine | 103.5 | 84.1 | 49.7 | 169 | 169 |
| Isoleucine | 63.0 | 50.8 | 28.0 | 181 | 181 |
| Valine | 75.5 | 60.5 | 34.0 | 178 | 178 |
| Histidine | 34.1 | 28.2 | 16.1 | 175 | 175 |
| Phenyl alanine | 67.3 | 53.7 | 27.1 | 198 | 198 |
| Tryptophan | 15.4 | 10.9 | 7.0 | - | - |

**TABLE 11**

| Composition of lactation-phase perfect mixed feed | | |
|---|---|---|
| | Dry matter (%) | Dry matter intake (lb/day) |
| Soybean cake (crude protein 49%) | 4.20 | 2.01 |
| Cottonseed | 6.60 | 3.19 |
| Corn silage | 19.90 | 9.62 |
| High-water corn | 28.40 | 13.75 |
| Corn fermentation cake | 1.50 | 0.78 |
| Rape-seed cake | 0.60 | 0.31 |
| Beer residue (dry) | 3.50 | 1.68 |
| Blood powder | 1.10 | 0.53 |
| Haylage | 24.50 | 11.82 |
| Beef tallow | 0.10 | 0.07 |
| Corn gluten meal | 1.30 | 0.64 |
| Minerals and vitamins | 2.20 | 1.08 |
| Oat | 4.80 | 2.31 |
| Urea | 0.10 | 0.04 |
| Fish meal | 0.20 | 0.08 |
| MEGALAC plus | 0.40 | 0.18 |
| MEGALAC (rumen-protected fatty acid) | 0.60 | 0.27 |
| Crude protein content 18.3% Amount of milk produced: 105 lbs/day Period of feeding: Six weeks following date of delivery | | |

**TABLE 12**

| Amino acid balance of lactation-phase perfect mixed feed | | | | |
|---|---|---|---|---|
| | A Amino acid supplied, g/day | B Amount of intestinal absorption, g/day | C Amino acid demanded, g/day | D (B/C) Excess (%) |
| Methionine | 56.6 | 46.6 | 53.6 | 87 |
| Lysine | 177.3 | 151.4 | 164.6 | 92 |
| Arginine | 166.8 | 145.8 | 94.7 | 154 |
| Threonine | 124.5 | 107.1 | 91.5 | 117 |
| Leucine | 227.7 | 198.7 | 169.8 | 117 |
| Isoleucine | 133.7 | 113.7 | 132.2 | 86 |
| Valine | 159.2 | 134.5 | 129.3 | 104 |
| Histidine | 75.8 | 66.1 | 57.0 | 116 |
| Phenyl alanine | 143.9 | 122.4 | 93.4 | 131 |
| Tryptophan | 28.0 | 19.8 | 32.9 | NA |
| NA: not available | | | | |

**TABLE 13**

| Amount of lactation | | | | |
|---|---|---|---|---|
| | Amount of milk produced (kg/day) | | | |
| | After delivery | | | |
| | Second week | Fourth week | Sixth week | Eighth week |
| Control plot (C) | 33.7 | 38.4 | 42.3 | 42.1 |
| RPAA ingestion plot (R) | 36.2 | 45.3 | 47.2 | 48.8 |
| Ratio of increase in amount of lactation, R-C/C (%) | 7.4 | 18.0 | 11.6 | 15.9 |

### [Example 2]

Forty-five (45) Holstein biparous cows (amount of milk produced 10,000 kg/head year and expected amount of feed ingested on dry basis 24 kg/day) were divided into three groups each of 15 cows, i.e. the methionine deficient plot (control plot), the protein supplementation plot, and the rumen bypass amino acid supplementation plot (RPAA supplementation plot). During the dry period preceding delivery, the cows of the three plots were severally fed with a dry-phase compound feed shown in Table 14 from three weeks before delivery till the date of delivery.

During the subsequent lactating period, the cows of the three groups were severally fed with a lactation-phase compound feed shown in Table 15. The amino balances of a lactation-phase lysine-methionine deficient feed and rumen bypass amino acid (RPAA) supplementation feed are shown in Table 16, the amino acid balance of a dry-phase protein supplementation feed is shown in Table 17, the amino acid balance of a lactation-phase lysine-methionine deficient feed and rumen bypass amino acid supplementation feed is shown in Table 18, and the amino acid balance of a lactation-phase protein supplementation feed is shown in Table 19. The cows of the RPAA supplementation plot were fed, during the aforementioned period prior to delivery, with the rumen bypass amino acid obtained in Production Example 2 and, during the aforementioned period of lactation, with the rumen bypass amino acid obtained in Production Example 1 respectively in the amounts indicated in Table 14 and Table 15. As respects the records of this feeding schedule, the amounts of the feed ingested on dry basis are shown in Table 20, the body weights of the cows in Table 21, and the data on health, physical condition, and corpulence of the cows visually observed and rated on the five-point scale in Table 22. The amounts of lactation are shown in Table 23. In the RPAA ingestion plot, the dry-phase balances of methionine, lysine, and arginine were improved and further the balances of six amino acids, i.e. the three amino acids just mentioned plus isoleucine, valine, and histidine, invariably surpassed 150% and these amino acid balances brought about a favorable effect on the nutritional balance of the cows. Thus, this plot surpassed the other two plots in terms of the amount of lactation. In the protein-supplemented feed ingestion plot, the balances were deficient in methionine and arginine during the dry period and also deficient in methionine and isoleucine during the lactation period. Thus, this plot was inferior in the amount of lactation to the RPAA supplementation plot.

**TABLE 14**

| Dry-Phase Compound Feed | | | | | | |
|---|---|---|---|---|---|---|
| | Lysine·methionine deficient feed *¹ | | Rumen bypass amino acid supplemented feed | | Protein-supplemented feed *² | |
| | Composition (dry) (%) | Amount ingested (dry) (lbs/day) | Composition (dry) (%) | Amount ingested (dry) (lbs/day) | Composition (dry) (%) | Amount ingested (dry) (lbs/day) |
| Soybean cake | 0.73 | 0.18 | 0.73 | 0.18 | 1.43 | 0.38 |
| Glass silage | 40.01 | 10.00 | 36.70 | 10.00 | 40.00 | 10.00 |
| Bypass oil | 0.73 | 0.18 | 0.73 | 0.18 | 0.72 | 0.18 |
| Corn fermentation cake | 3.91 | 0.98 | 3.88 | 0.98 | 0.48 | 0.12 |
| Corn | 4.88 | 1.22 | 4.84 | 1.22 | 5.64 | 1.41 |
| Wheat | 4.88 | 1.22 | 4.84 | 1.22 | 5.96 | 1.49 |
| Vitamins and minerals | 0.84 | 0.21 | 0.83 | 0.21 | 0.71 | 0.18 |
| Dry grass (oat) | 40.01 | 10.00 | 36.70 | 10.00 | 40.00 | 10.00 |
| High-water corn | 4.00 | 1.00 | 3.97 | 1.00 | 4.00 | 1.00 |
| Bypass amino acid | -- | -- | 0.78 | 0.20 | -- | -- |
| Boned meat flour | -- | -- | -- | -- | 0.48 | 0.12 |
| Blood powder | -- | -- | -- | -- | 0.34 | 0.08 |
| Starch | -- | -- | -- | -- | 0.24 | 0.06 |

| | | | | | | |
|---|---|---|---|---|---|---|
| *1: Crude protein content (on dry basis) 14.1% | | | | | | |
| *2: Crude protein content (on dry basis) 14.8% | | | | | | |

**TABLE 15**

| Lactation-Phase Compound Feed | | | | | | |
|---|---|---|---|---|---|---|
| | Lysine·methionine deficient feed *¹ | | Rumen bypass amino acid supplemented feed | | Protein-supplemented feed *² | |
| | Composition (dry) (%) | Amount ingested (dry) (lbs/day) | Composition (dry) (%) | Amount ingested (dry) (lbs/day) | Composition (dry) (%) | Amount ingested (dry) (lbs/day) |
| Soybean cake (Crude protein 49%) | 2.84 | 1.50 | 2.81 | 1.50 | 5.81 | 3.00 |
| Glass silage | 32.22 | 17.50 | 32.13 | 17.50 | 31.78 | 17.00 |
| Bypass oil | 2.82 | 1.50 | 2.80 | 1.50 | 2.80 | 1.50 |
| Corn fermentation cake | 15.16 | 8.00 | 15.01 | 8.00 | 1.87 | 1.00 |
| Corn | 18.96 | 10.00 | 18.78 | 10.00 | 22.08 | 11.80 |
| Wheat | 18.95 | 10.00 | 18.78 | 10.00 | 23.36 | 12.50 |
| Vitamins and minerals | 3.35 | 1.77 | 3.32 | 1.77 | 5.61 | 3.00 |
| Dry grass (alfalfa) | 5.69 | 3.00 | 5.64 | 3.00 | 2.80 | 1.50 |
| Bypass amino acid | -- | -- | 0.74 | 0.40 | -- | -- |
| Boned meat flour | -- | -- | -- | -- | 1.87 | 1.00 |
| Blood powder | -- | -- | -- | -- | 1.31 | 0.70 |
| Starch | -- | -- | -- | -- | 0.93 | 0.50 |

| | | | | | | |
|---|---|---|---|---|---|---|
| *1; Crude protein content (on dry basis) 17.5% | | | | | | |
| *2: Crude protein content (on dry basis) 18.6% | | | | | | |

**TABLE 16**

| Amino acid balance of dry-phase lysine·methionine deficient feed and RPAA-supplemented feed | | | | | |
|---|---|---|---|---|---|
| | A Amino acid supplied, g/day | B Amount of intestinal absorption, g/day | C Amino acid demanded, g/day | D (B/C) Excess in control plot (%) | E Excess in RPAA plot (%) |
| Methionine | 29.5 | 22.2 | 15.7 | 141 | 169 |
| Lysine | 84.1 | 88.7 | 40.0 | 145 | 174 |
| Arginine | 72.6 | 60.1 | 45.3 | 133 | 151 |
| Threonine | 50.3 | 49.5 | 30.0 | 185 | 185 |
| Leucine | 97.9 | 77.8 | 48.0 | 157 | 157 |
| Isoleucine | 74.0 | 51.9 | 29.4 | 178 | 178 |
| Valine | 29.9 | 58.5 | 34.3 | 171 | 171 |
| Histidine | 53.8 | 24.1 | 15.6 | 155 | 155 |
| Phenyl alanine | 83.8 | 50.0 | 27.1 | 194 | 194 |
| Tryptophan | 18.0 | 11.3 | 7.4 | 153 | 153 |

**TABLE 17**

| Amino acid balance of dry-phase protein-supplemented feed | | | | |
|---|---|---|---|---|
| | A Amino acid supplied, g/day | B Amount of intestinal absorption, g/day | C Amino acid demanded, g/day | D (B/C) Excess (%) |
| Methionine | 30.2 | 23.0 | 15.7 | 147 |
| Lysine | 89.1 | 62.8 | 40.0 | 157 |
| Arginine | 78.1 | 63.9 | 45.3 | 141 |
| Threonine | 62.2 | 51.6 | 30.0 | 172 |
| Leucine | 100.8 | 81.1 | 48.0 | 169 |
| Isoleucine | 66.2 | 53.8 | 29.4 | 183 |
| Valine | 76.4 | 61.4 | 34.3 | 179 |
| Histidine | 31.7 | 26.2 | 15.6 | 168 |
| Phenyl alanine | 66.3 | 52.6 | 27.1 | 194 |
| Tryptophan | 16.2 | 11.3 | 7.4 | NA |
| NA: not available | | | | |

**TABLE 18**

| Amino acid balance of lactation-phase lysine·methionine deficient feed and RPAA-supplement feed | | | | | |
|---|---|---|---|---|---|
| | A Amino acid supplied, g/day | B Amount of intestinal absorption, 9/day | C Amino acid demanded, g/day | D (B/C) Excess in control plot (%) | E Excess in RPAA plot |
| Methionine | 88.8 | 52.0 | 58.3 | 89 | 110 |
| Lysine | 186.8 | 150.3 | 178.8 | 85 | 110 |
| Arginine | 177.2 | 150.0 | 106.2 | 143 | 143 |
| Threonine | 142.2 | 119.6 | 100.5 | 118 | 118 |
| Leucine | 259.9 | 216.7 | 183.3 | 118 | 118 |
| Isoleucine | 152.5 | 125.7 | 142.9 | 89 | 110 |
| Valine | 182.2 | 149.5 | 140.2 | 107 | 113 |
| Histidine | 75.8 | 83.6 | 81.7 | 102 | 115 |
| Phenyl alanine | 159.8 | 130.3 | 102.0 | 128 | 128 |
| Tryptophan | 32.0 | 22.6 | 35.8 | NA | NA |
| NA: not available | | | | | |

**TABLE 19**

| Amino acid balance of lactation-phase protein-supplemented feed | | | | |
|---|---|---|---|---|
| | A Amino acid supplied, g/day | B Amount of intestinal absorption, g/day | C Amino acid demanded, g/day | D (B/C) Excess (%) |
| Methionine | 72.2 | 59.5 | 58.3 | 102 |
| Lysine | 234.0 | 198.5 | 178.8 | 111 |
| Arginine | 211.7 | 190.1 | 106.2 | 179 |
| Threonine | 160.6 | 139.7 | 100.5 | 139 |
| Leucine | 289.3 | 247.5 | 183.3 | 135 |
| Isoleucine | 167.6 | 141.5 | 142.9 | 99 |
| Valine | 206.9 | 174.1 | 140.4 | 124 |
| Histidine | 94.1 | 107.8 | 81.7 | 132 |
| Phenyl alanine | 183.2 | 155.0 | 102.0 | 152 |
| Tryptophan | 34.4 | 24.3 | 35.8 | NA |
| NA: not available | | | | |

**TABLE 20**

| Amounts of feeds of Table 14 & Table 15 (dry) (DMI) (kg/day) | | | | | | | |
|---|---|---|---|---|---|---|---|
| | Before delivery | | | After delivery | | | |
| | Three weeks | Two weeks | One week | Second week | Fourth week | Sixth week | Eighth week |
| Lysine·methionine deficient plot | 13.0 | 10.3 | 9.1 | 11.1 | 16.4 | 18.4 | 18.2 |
| Protein supply plot | 13.1 | 10.4 | 9.0 | 14.3 | 17.0 | 17.4 | 17.0 |
| Rumen bypass amino acid ingestion plot | 12.9 | 10.2 | 8.4 | 13.3 | 16.1 | 21.2 | 21.0 |
| Holstein cows (15/plot): At least biparous, amount of milk production 10,000 kg/head·year, amount feed supplied 24 kg (on dry basis) | | | | | | | |

**TABLE 21**

| Body weights of cows raised (kg) | | | | | | | |
|---|---|---|---|---|---|---|---|
| | Before delivery | | | After delivery | | | |
| | Three weeks | Two weeks | One week | Second week | Fourth week | Sixth week | Eighth week |
| Lysine·methionine deficient plot | 730 | 750 | 730 | 580 | 550 | 560 | 580 |
| Protein supply plot | 700 | 720 | 720 | 580 | 540 | 530 | 550 |
| Rumen bypass amino acid ingestion plot | 750 | 740 | 750 | 630 | 600 | 620 | 610 |

**TABLE 22**

| Body condition score of cows raised (BCS) | | | | | | | |
|---|---|---|---|---|---|---|---|
| | Before delivery | | | After delivery | | | |
| | Three weeks | Two weeks | One week | Second week | Fourth week | Sixth week | Eighth week |
| Lysine·methionine deficient plot | 4.0 | 4.0 | 4.0 | 3.2 | 2.6 | 2.5 | 2.6 |
| Protein supply plot | 4.1 | 4.0 | 3.8 | 3.2 | 2.5 | 2.2 | 2.5 |
| Rumen bypass amino acid ingestion plot | 4.0 | 4.0 | 4.0 | 3.4 | 2.8 | 2.6 | 2.5 |

**TABLE 23**

| Amount of lactation of cows raised (kg/day) | | | | |
|---|---|---|---|---|
| | After delivery | | | |
| | Second week | Fourth week | Sixth week | Eighth week |
| Lysine·methionine deficient plot (C) | 27.5 | 29.0 | 37.0 | 38.5 |
| Protein supply plot (P) | 31.5 | 38.2 | 40.1 | 42.8 |
| RPAA ingestion plot (R) | 31.5 | 38.3 | 43.5 | 45.0 |

| Ratio of increase in amount of lactation (%), | | | | |
|---|---|---|---|---|
| (R-C)/C | 14.5 | 32.1 | 17.6 | 19.5 |
| (R-P)/P | 0.0 | 0.3 | 8.5 | 5.1 |
| (P-C)/C | 14.5 | 31.7 | 8.4 | 11.2 |

### [Example 3]

Eighty (80) bi- or more-parous Holstein cows divided into two groups were used in this test. The 40 cows of the control plot and the 40 cows of the rumen bypass amino acid ingestion plot (RPAA ingestion plot) were fed with a dry-phase perfect mixed feed shown in Table 9 from three weeks before the expected day of delivery onward. During six weeks following the delivery, they were fed with the lactation-phase perfect mixed feed of Example 1 shown in Table 11. The cows of the rumen bypass amino acid ingestion plot were fed, during the dry period, with the rumen bypass amino acid obtained in Production Example 2 at a daily dose of 0.60 lb and, during the lactation period, with the rumen bypass amino acid obtained in Production Example 1 at a daily dose of 0.98 lb. The cows of the control plot, during the lactation period, were fed with the rumen bypass amino acid at a daily dose of 0.60 lb. The amino acid balances in the control plot and the rumen bypass amino acid ingestion plot during the lactation period are the same as shown in Table 10. The amino acid balances of the control plot and the rumen bypass amino acid ingestion plot after delivery are shown in Table 24.

The amounts of lactation by the milk cows are shown in Table 25. The data clearly indicate that the nutritional condition of cow is improved, the decline of physical strength due to delivery is alleviated, and the lactation is benefited by feeding cows during a brief dry period preceding delivery with amino acids in balanced concentrations not less than 1.5 times those demanded by the cows.

**TABLE 24**

| Amino acid balance of lactation-phase perfect mixed feed and RPAA ingestion | | | | | |
|---|---|---|---|---|---|
| | A Amino acid supplied, g/day | B Amount of intestinal absorption, g/day | C Amino acid demanded, g/day | D (B/C) Excess in control plot (%) | E Excess in RPAA plot (%) |
| Methionine | 71.7 | 59.0 | 53.6 | 110 | 110 |
| Lysine | 215.9 | 184.4 | 164.6 | 112 | 112 |
| Arginine | 166.8 | 145.8 | 94.7 | 154 | 154 |
| Threonine | 124.5 | 107.1 | 94.5 | 117 | 117 |
| Leucine | 227.7 | 198.7 | 169.8 | 117 | 117 |
| Isoleucine | 172.5 | 146.7 | 132.2 | 111 | 111 |
| Valine | 174.5 | 147.4 | 129.3 | 114 | 114 |
| Histidine | 82.3 | 71.8 | 57.0 | 126 | 126 |
| Phenyl alanine | 143.9 | 122.4 | 93.4 | 131 | 131 |
| Tryptophan | 28.0 | 19.8 | 32.9 | NA | NA |
| NA: not available | | | | | |

**TABLE 25**

| Amount of lactation of cows raised (kg/day) | | | | |
|---|---|---|---|---|
| | After delivery | | | |
| | Second week | Fourth week | Sixth week | Eighth week |
| Control plot (C) (RPAA ingested after delivery) | 36.1 | 42.1 | 45.1 | 45.8 |
| RPAA ingestion plot (R) (RPAA ingested before and after delivery) | 37.5 | 44.4 | 48.8 | 48.5 |
| Ratio of increase in amount of lactation (%) | 3.9 | 5.5 | 8.2 | 5.9 |

### [Comparative Example 1]

Milk cows were fed with a perfect compound feed shown in Table 26 prior to delivery. The amino acid balances involved in this case are shown in Table 27. They were fed with a lactation-phase perfect compound feed shown in Table 28 after delivery and the cows of the RPAA ingestion plot were fed additionally with the RPAA obtained in Production Example 2 at a prescribed dose. The amino acid balances involved in this case are shown in Table 29.

The amount of lactation is shown in Table 30. In the RPAA ingestion plot, though the amount of lactation was slightly larger than in the control plot, the amino acid balances prior to delivery fell short of the levels contemplated by this invention. Thus, no such conspicuous increases as demonstrated in the working examples were attained in this comparative example.

**TABLE 26**

| Composition of dry-phase perfect mixed feed | | |
|---|---|---|
| | Concentration (%) | Amount (lb/month) |
| Soybean cake (crude protein 49%) | 0.78 | 0.17 |
| Beet molasses | 0.51 | 0.12 |
| Haylage | 40.28 | 9.00 |
| Minerals and vitamins | 0.78 | 0.17 |
| MEGALAC | 0.76 | 0.17 |
| Corn flour | 5.66 | 1.26 |
| Rape-seed cake | 3.86 | 0.86 |
| Wheat | 7.12 | 1.59 |
| Hay | 40.26 | 9.00 |
| Crude protein content 16.8% Period of feeding: From 3 weeks before delivery till date of delivery | | |

**TABLE 27**

| Amino acid balance of dry-phase compound feed | | | | |
|---|---|---|---|---|
| | A Amino acid supplied, g/day | B Amount of intestinal absorption, g/day | C Amino acid demanded, g/day | D (B/C) Excess (%) |
| Methionine | 29.8 | 22.0 | 15.8 | 139 |
| Lysine | 87.1 | 68.5 | 46.3 | 148 |
| Arginine | 74.6 | 61.4 | 45.5 | 135 |
| Threonine | 61.1 | 50.3 | 30.1 | 167 |
| Leucine | 95.0 | 75.5 | 48.1 | 157 |
| Isoleucine | 67.2 | 54.1 | 28.8 | 188 |
| Valine | 74.1 | 58.3 | 33.9 | 172 |
| Histidine | 30.7 | 25.0 | 14.7 | 159 |
| Phenyl alanine | 58.0 | 45.0 | 27.1 | 166 |
| Tryptophan | 15.8 | 12.4 | 7.3 | NA |
| NA: not available | | | | |

**TABLE 28**

| Composition of lactation-phase perfectly mixed compound feed | | |
|---|---|---|
| | Dry matter (%) | Dry matter intake (lb/day) |
| Soybean cake (crude protein 49%) | 8.52 | 4.53 |
| Beet molasses | 2.27 | 1.20 |
| Haylage | 27.37 | 14.60 |
| Minerals and vitamins | 1.99 | 1.07 |
| MEGALAC | 2.04 | 1.09 |
| Corn flour | 21.57 | 11.51 |
| Rape-seed cake | 5.00 | 2.67 |
| Wheat | 13.79 | 7.36 |
| Hay | 16.07 | 8.58 |
| RPAA | 1.39 | 0.33 |
| Crude protein content 18.0% Period of feeding: From six weeks after delivery | | |

**TABLE 29**

| Amino acid balance of lactation-phase compound feed | | | | | |
|---|---|---|---|---|---|
| | A Amino acid supplied, g/day | B Amount of intestinal absorption, g/day | C Amino acid demanded, g/day | D (B/C) Excess in control plot (%) | E Excess in RPAA plot (%) |
| Methionine | 82.0 | 67.1 | 55.5 | 108 | 121 |
| Lysine | 228.0 | 193.1 | 170.1 | 103 | 113 |
| Arginine | 187.1 | 161.6 | 100.7 | 160 | 160 |
| Threonine | 145.3 | 123.4 | 95.9 | 128 | 128 |
| Leucine | 289.6 | 249.6 | 174.4 | 143 | 143 |
| Isoleucine | 207.3 | 156.1 | 135.7 | 101 | 115 |
| Valine | 183.5 | 152.3 | 133.3 | 107 | 114 |
| Histidine | 80.6 | 69.3 | 58.7 | 111 | 118 |
| Phenyl alanine | 162.2 | 135.4 | 97.1 | 139 | 139 |
| Tryptophan | 35.0 | 25.0 | 34.0 | NA | NA |
| NA: not available | | | | | |

**TABLE 30**

| Amount of lactation of cows raised (kg/day) | | | | | |
|---|---|---|---|---|---|
| | After delivery | | | | |
| | Second week | Fourth week | Sixth week | Eighth week | Twentieth week |
| Control plot (C) | 33.0 | 36.0 | 36.0 | 37.0 | 33.5 |
| RPAA ingestion plot (R) | 35.0 | 37.5 | 39.0 | 37.5 | 34.5 |
| Ratio of increase in amount of lactation (%), (R-C)/C | 6.1 | 4.2 | 8.3 | 1.3 | 3.0 |

### [Effect of the Invention]

This invention concerns a method for raising dairy cattle characterized by daily feeding the dairy cattle with a highly concentrated amino acid feed containing the amino acids protected in the first stomach of a cow and formed predominantly of lysine, methionine, isoleucine, valine, arginine, and histidine at doses containing the amino acids in concentrations 1.5 to three times those demanded by the dairy cattle at the abomasum and intestine for the period from three weeks before the expected date of delivery till the date of delivery. Since the feed fulfills the nutritional balance in the maternal placentas of milk cows, it is effective in alleviating the decline of physical strength due to a decrease in the amount of feed ingested after the delivery, repressing the growth of stress, and retaining the amount of lactation at a high level.

## Claims

1. A method for raising dairy cattle characterized by daily feeding the dairy cattle with a highly concentrated amino acid feed containing the total amino acids of a) the amino acids protected in the rumen of a cow and b) the amino acids contained naturally in raw material of feed composition and formed predominantly of lysine, methionine, isoleucine, valine, arginine and histidine at doses containing said amino acids in concentrations 1.5 to 3 times those demanded by said dairy cattle for the period from three weeks before the expected date of delivery till the date of delivery.

2. A method for raising dairy cattle characterized by daily feeding the dairy cattle with a highly concentrated amino acid feed containing the total amino acid of a) the amino acids protected in a rumen of dairy cattle and b) the amino acids contained naturally in raw material of feed composition and formed predominantly of lysine, methionine, isoleucine, valine, arginine and histidine at doses containing said amino acids in concentrations 1.5 to 3 times those demanded by said dairy cattle for the period from three weeks before the expected date of delivery till the date of delivery, and continuously at doses containing said amino acids in concentrations 1.1 to 2 times those demanded by the dairy cattle for period of six weeks at most after the time of delivery.
